# EUROPÄISCHE PATENTSCHRIFT

(11) **EP 3 915 825 B1**
(45) Veröffentlichungstag und Bekanntmachung des Hinweises auf die Patenterteilung: **15.02.2023**
(21) Anmeldenummer: 21174892.6
(22) Anmeldetag: 20.05.2021
(51) Int. Cl.: B60L 53/10, B60L 53/53, B60L 53/51

(54) **MODULARE LADESÄULE ZUM ELEKTRISCHEN GLEICHSTROMLADEN EINER BATTERIE EINES ELEKTROFAHRZEUGS**
MODULAR CHARGING COLUMN FOR ELECTRIC DC LOADING OF A BATTERY OF AN ELECTRIC VEHICLE
CHARGEUR MODULAIRE DESTINÉ À LA CHARGE ÉLECTRIQUE EN COURANT CONTINU D'UNE BATTERIE D'UN VÉHICULE ÉLECTRIQUE

(30) Priorität: 25.05.2020 LU 101820
(43) Veröffentlichungstag der Anmeldung: 01.12.2021
(73) Patentinhaber: Phoenix Contact GmbH & Co. KG, 32825 Blomberg (DE)
(72) Erfinder: Remmert, Guido, 59505 Bad Sassendorf (DE)
(74) Vertreter: Blumbach · Zinngrebe Patentanwälte PartG mbB

(56) Entgegenhaltungen:
- EP-A1- 3 333 005
- DE-A1-102017 130 992
- DE-A1-102017 207 102
- DE-A1-102018 218 555

## Beschreibung

Die vorliegende Erfindung betrifft eine Ladesäule mit zumindest einem ersten Ladeanschluss zum elektrischen Gleichstromladen einer Batterie eines Elektrofahrzeugs und mit zumindest einem ersten Lade-/Speicherstrang. Der erste Lade-/Speicherstrang ist hierbei mit dem ersten Ladeanschluss elektrisch verbunden, mit zumindest einem elektrischen Energiespeicher elektrisch koppelbar und umfasst zumindest eine erste Ladeschaltung zum Laden des zumindest einen elektrischen Energiespeichers im elektrisch gekoppelten Zustand mit elektrischer Energie aus einem Speisestromnetz sowie eine zweite Ladeschaltung zum Laden der Batterie des Elektrofahrzeugs mit elektrischer Energie.

Beim Gleichstromladen aus einer Ladesäule erfolgt ein Aufladen der Batterie des Elektrofahrzeugs üblicherweise direkt mit Gleichstrom. Der Gleichstrom wird in der Regel über ein leistungsstarkes Ladegerät in der Ladesäule zur Verfügung gestellt, wobei das Ladegerät meist über einen Netzanschluss an ein Wechselstromnetz angeschlossen ist und den daraus stammenden Wechselstrom in Gleichstrom umwandelt oder aber Gleichstrom aus einer mit dem Ladegerät elektrisch verbundenen Photovoltaikanlage bezieht. Ein leistungsstarkes Ladegerät in der Ladesäule ermöglicht hohe Ladeleistungen und somit ein Aufladen der Batterie des Elektrofahrzeugs innerhalb relativ kurzer Ladezeiten. Insbesondere, wenn der Netzanschluss jedoch eine geringere Leistung bereitstellt als für einen schnellen Ladevorgang erforderlich ist, können Zwischenspeicher zur Zwischenspeicherung der aus dem Wechselstromnetz bereitgestellten Energie, z.B. in Form von Akkumulatoren bzw. Akkus, zum Einsatz kommen. Findet kein Aufladen der Batterie eines Elektrofahrzeugs statt, wie es beispielsweise oft nachts der Fall ist, so wird dennoch der Zwischenspeicher mit elektrischer Energie aus dem Wechselstromnetz über den Netzanschluss nachgeladen. Entspricht die Kapazität des Zwischenspeichers in etwa der Kapazität der Batterie des Elektrofahrzeugs, kann folglich mittels des nachgeladenen Zwischenspeichers ein Aufladen der Batterie des Elektrofahrzeugs innerhalb relativ kurzer Ladezeiten erfolgen. Ebenso kann die Batterie des Elektrofahrzeugs, falls deren Kapazität in etwa der Kapazität des Zwischenspeichers entspricht, mittels eines noch nicht vollständig nachgeladenen Zwischenspeichers innerhalb relativ kurzer Ladezeiten aufgeladen werden. Grund dafür ist, dass während der Aufladung der Batterie des Elektrofahrzeugs aus dem Zwischenspeicher auch gleichzeitig wiederum der Zwischenspeicher mit elektrischer Energie aus dem Wechselstromnetz über den Netzanschluss nachgeladen wird.

So offenbart die DE 10 2018 204 057 A1 beispielsweise eine Ladestation für Elektrofahrzeuge mit mindestens zwei Ladesäulen und einem elektrischen Energiespeicher, welcher zumindest zwei elektrisch getrennte Speichereinheiten mit jeweils einem separaten bidirektionalen Laderegler aufweist. Jeder Speichereinheit ist mindestens eine Ladesäule zum Versorgen mit elektrischer Energie zugeordnet, wobei jeweils ein bidirektionaler Laderegler, eine Speichereinheit, ein Kfz-Laderegler und mindestens eine Ladesäule einen Speicherstrang bilden. Der bidirektionale Laderegler ist derart ausgebildet, dass über ihn eine Speichereinheit aus einem Netzanschluss geladen werden kann, aber über ihn auch Energie von einer Speichereinheit entnommen werden kann. Im sogenannten Unterstützungsmodus führt dies dazu, dass ein Speicherstrang über den bidirektionalen Laderegler einem anderen Speicherstrang elektrische Energie zuführen kann.

Außerdem ist aus DE10 2017 130992 A1 eine Lade-/Entladeeinheit zur Anbindung eines mobilen elektrischen Energiespeichers an ein Spannungsnetz mit elektrischen Energiespeichern im Zwischenkreis bekannt, bei die Wandler der Primär- und Sekundärseite jeweils modular aufgebaut sind.

Zwischenspeicher in der Ladesäule werden oftmals auch durch eine Parallelschaltung von Akkus realisiert. Dies hat jedoch den Nachteil, dass unterschiedliche Ladezustände der einzelnen parallelgeschalteten Akkus teilweise zu hohen Ausgleichsströmen führen, von denen eine erhebliche Gefahr ausgehen kann. So können beispielsweise bei ausreichend hohen elektrischen Spannungen Lichtbögen entstehen, welche zu einer Überhitzung der Batterien bis hin zu einem Brand oder sogar einer Explosion, und somit der Zerstörung der Batterien führen können. Im Falle einer durch Überhitzung zerstörten Isolierung besteht zudem die Gefahr eines elektrischen Stromschlags. Um diese potentiellen Gefahren zu vermeiden, muss bei parallelgeschalteten Akkus ein zusätzlicher Aufwand für einen Ausgleich dieser Ladungsunterschiede, und somit für eine Symmetrierung der Akkus, betrieben werden, beispielsweise durch eine Integration dieser Funktion in ein Batteriemanagement, welches zur Überwachung, Regelung und zum Schutz von Akkus dient.

Eine Aufgabe der vorliegenden Erfindung ist es, eine Ladesäule zum schnellen Gleichstromladen einer Batterie eines Elektrofahrzeugs zu schaffen, welche in ihrem Aufbau technisch einfach aufgebaut ist, eine große Flexibilität aufweist und insbesondere dem vorgenannten Nachteil zumindest teilweise effektiv entgegenwirkt.

Die Lösung der Erfindung ist durch einen Gegenstand mit den Merkmalen des unabhängigen Anspruchs 1 wiedergegeben. Vorteilhafte Ausgestaltungen und Weiterentwicklungen sind Gegenstand der weiteren Merkmale der Unteransprüche.

Dementsprechend geht die Lösung gemäß der Erfindung von einer Ladesäule mit einem ersten Ladeanschluss zum elektrischen Gleichstromladen einer Batterie eines an den ersten Ladeanschluss anschließbaren Elektrofahrzeugs aus, wobei die Ladesäule einen ersten Lade-/Speicherstrang besitzt, welcher mit dem ersten Ladeanschluss elektrisch verbunden ist. Der erste Lade-/Speicherstrang ist zumindest mit einem elektrischen Energiespeicher elektrisch koppelbar und umfasst zumindest eine erste Ladeschaltung zum Laden des zumindest einen elektrischen Energiespeichers im elektrisch gekoppelten Zustand mit elektrischer Energie aus einem Speisestromnetz sowie eine zweite Ladeschaltung zum Laden der Batterie eines an dem ersten Ladeanschluss anschließbaren Elektrofahrzeugs mit elektrischer Energie. Die erfindungsgemäße Ladesäule zeichnet sich dadurch aus, dass sie modular aufgebaut ist und eine Vielzahl von technisch identischen Lademodulen aufweist. Jedes einzelne Lademodul umfasst eine bestimmte Mehrzahl von elektrisch, insbesondere galvanisch voneinander getrennten autarken Ladeeinheiten und jede einzelne autarke Ladeeinheit weist eine Umwandlungseinrichtung zum Umwandeln einer Eingangsspannung in eine Ausgangsgleichspannung auf. Die erste Ladeschaltung besitzt ein erstes Lademodul und die zweite Ladeschaltung besitzt eine Mehrzahl von Lademodulen, sodass die Mehrzahl der Lademodule der zweiten Ladeschaltung gleich der bestimmten Mehrzahl von elektrisch, insbesondere galvanisch voneinander getrennten autarken Ladeeinheiten eines jeweiligen Lademoduls ist. Jede autarke Ladeeinheit des ersten Lademoduls der ersten Ladeschaltung ist im Betrieb der Ladesäule auf deren Primärseite mit dem Speisestromnetz elektrisch verbindbar und auf deren Sekundärseite zum Anschließen an jeweils genau einen elektrischen Energiespeicher und im elektrisch angeschlossenen Zustand zum Aufladen dieses elektrischen Energiespeichers mit elektrischer Energie aus dem Speisestromnetz ausgebildet. Alle autarken Ladeeinheiten eines jeweiligen Lademoduls der Mehrzahl von Lademodulen der zweiten Ladeschaltung sind auf deren Primärseite jeweils gemeinsam zum elektrischen Anschließen an genau einen elektrischen Energiespeicher und im elektrisch angeschlossenen Zustand zum Beziehen von elektrischer Energie aus diesem einen elektrischen Energiespeicher ausgebildet. Die autarken Ladeeinheiten der Lademodule der zweiten Ladeschaltung sind auf deren Sekundärseite parallelgeschaltet und nach deren Parallelschaltung mit dem ersten Ladeanschluss elektrisch verbunden.

Die erfindungsgemäße Ladesäule sieht demnach einen modularen Aufbau vor, bei welchem ein mit dem ersten Ladeanschluss elektrisch verbundener erster Lade-/Speicherstrang in elektrisch voneinander isolierte, unabhängige, jedoch im Wesentlichen identisch zueinander ausgebildete Teilstränge aufgegliedert wird. Jeder dieser Teilstränge umfasst eine an ein Speisestromnetz anschließbare, autarke Ladeeinheit des ersten Lademoduls der ersten Ladeschaltung, welche auf der Sekundärseite an genau einen elektrischen Energiespeicher elektrisch anschließbar ist, und ein an diesen elektrischen Energiespeicher elektrisch anschließbares Lademodul der zweiten Ladeschaltung mit jeweils der bestimmten Mehrzahl von autarken Ladeeinheiten.

Die einzelnen mit der Ladesäule elektrisch koppelbaren elektrischen Energiespeicher haben die Funktion eines eingangs erwähnten Zwischenspeichers und können insbesondere eine Batterie bzw. ein Akkumulator sein.

Dadurch, dass die Teilstränge erst auf der Sekundärseite der jeweiligen autarken Ladeeinheiten der Lademodule der zweiten Ladeschaltung parallelgeschaltet und dann mit dem ersten Ladeanschluss elektrisch verbunden werden, können im elektrisch angeschlossenen Zustand der jeweiligen elektrischen Energiespeicher keine Ausgleichsströme zwischen diesen jeweiligen elektrischen Energiespeichern der einzelnen Teilstränge fließen. Die elektrischen Energiespeicher sind zweckmäßig galvanisch voneinander getrennt. Eine aufwändige Symmetrierung der elektrischen Energiespeicher bzw. ein beispielsweise mittels Batteriemanagement gesteuertes Ausgleichen von Ladungsunterschieden der elektrischen Energiespeicher ist daher im Rahmen der vorliegenden Erfindung nicht erforderlich und vielmehr überflüssig. Nach erfolgter und zuvor beschriebener Parallelschaltung der einzelnen Teilstränge kann dem ersten Ladeanschluss somit die Summe der elektrischen Energie, die in den einzelnen jeweils elektrisch angeschlossenen elektrischen Energiespeichern der Teilstränge gespeichert ist, gleichzeitig zur Verfügung gestellt werden, ohne dass irgendwelchen auftretenden Ausgleichsströmen entgegengewirkt werden muss. Die erfindungsgemäße Ladesäule ermöglicht somit durch deren modularen Aufbau umfassend eine Vielzahl von technisch gleichen Lademodulen einerseits und durch die auf der Sekundärseite erfolgende Parallelschaltung der einzelnen Teilstränge der Ladesäule andererseits ein schnelles Laden eines an den ersten Ladeanschluss anschließbaren Elektrofahrzeugs mit Gleichstrom.

Dass alle von der erfindungsgemäßen Ladesäule umfassten Lademodule technisch exakt gleich bzw. identisch zueinander sind, hat darüber hinaus den Vorteil, dass die Ladesäule auf einfache Weise modular erweiterbar ist, indem zusätzliche Lademodule bei Bedarf entsprechend hinzugefügt werden können, sowie, dass defekte Lademodule auf einfache Weise austauschbar sind. De erfindungsgemäße Ladesäule weist somit eine große Flexibilität auf. Zudem lassen sich die Herstellungskosten für eine derart modular aufgebaute Ladesäule senken, da diese neben dem ersten Ladeanschluss lediglich aus Lademodulen, und optional aus elektrischen Energiespeichern, aufgebaut ist und dadurch deutlich an Komplexität verliert.

Gemäß einer Weiterbildung der erfindungsgemäßen Ladesäule ist die Umwandlungseinrichtung jeder einzelnen autarken Ladeeinheit zum Umwandeln sowohl einer Gleichspannung als auch einer Wechselspannung in Gleichspannung ausgebildet. Jede einzelne autarke Ladeeinheit eines jeweiligen Lademoduls der Ladesäule ist folglich in der Lage, eine Eingangsspannung sowohl in Form einer Gleichspannung als auch in Form einer Wechselspannung in eine Ausgangsgleichspannung umzuwandeln. Die Umwandlungseinrichtung ist somit eine Umwandlungseinrichtung von sogenannter Universalspannung (UC = Universal Current) als Eingangsspannung in Gleichspannung (DC = Direct Current) als Ausgangsspannung. Eine solche Umwandlungseinrichtung ermöglicht es, dass die erfindungsgemäße Ladesäule an beliebige Speisestromnetze angeschlossen werden kann. So kann die erfindungsgemäße Ladesäule dank einer solchen Umwandlungseinrichtung beispielsweise auch elektrische Energie aus einer Kombination von einem als Wechselstromnetz ausgebildeten Speisestromnetz und einem als Gleichstromnetz ausgebildeten Speisestromnetz beziehen.

Eine Ausführungsform der erfindungsgemäßen Ladesäule sieht vor, dass die Ladesäule eine Mehrzahl von elektrischen Energiespeichern aufweist. Jeder elektrische Energiespeicher der Mehrzahl von elektrischen Energiespeichern ist jeweils an eine autarke Ladeeinheit des ersten Lademoduls der ersten Ladeschaltung sowie an alle autarke Ladeeinheiten eines jeweiligen Lademoduls der Mehrzahl von Lademodulen der zweiten Ladeschaltung elektrisch angeschlossen. Die elektrischen Energiespeicher sind bedingt durch den Aufbau der erfindungsgemäßen Ladesäule, insbesondere die Untergliederung des ersten Lade-/Speicherstrangs in Teilstränge, galvanisch voneinander getrennt, sodass keine Ausgleichsströme zwischen den einzelnen elektrischen Energiespeichern fließen können.

Jedoch kann die Ladesäule in einer weiteren Ausführungsform auch erst beispielsweise nach deren Auslieferung an den Betreiber mit elektrischen Energiespeichern in der bereits beschriebenen Art elektrisch gekoppelt werden, sodass die elektrischen Energiespeicher nicht von der Ladesäule umfasst sind. So kann der Betreiber der Ladesäule selbst elektrische Energiespeicher als Zwischenspeicher entsprechend des technischen Charakters der mit der Ladesäule zu ladenden Fahrzeugbatterie auswählen und mit der Ladesäule elektrisch koppeln.

In einer Ausführungsform der erfindungsgemäßen Ladesäule sind die von der Ladesäule umfassten elektrischen Energiespeicher hinsichtlich zumindest einer Größe aus der Gruppe von ihrer maximal speicherbaren Energie, ihrer Nennspannung, ihres maximalen Lade- und Entladestroms und ihres Ladezustands verschieden. Da bei der erfindungsgemäßen Ladesäule keine Ausgleichsströme zwischen den einzelnen elektrischen Energiespeichern fließen können, können auch technisch ungleiche elektrische Energiespeicher bzw. elektrische Energiespeicher mit ungleichem Ladezustand ohne den zusätzlichen Aufwand einer Symmetrierung von Ladungsunterschieden eingesetzt werden. Dies hat den Vorteil, dass eine größere Auswahl an verwendbaren elektrischen Energiespeichern als Zwischenspeicher für die Ladesäule zur Verfügung steht und keine Beschränkung auf einen speziellen Typ bzw. Zustand des Energiespeichers besteht.

Die elektrischen Energiespeicher können in einer alternativen Ausführungsform jedoch auch hinsichtlich ihrer maximal speicherbaren Energie, ihrer Nennspannung und/oder ihres maximalen Lade- und Entladestroms technisch gleich sein. Dabei kann es vorteilhaft sein, dass jeder elektrische Energiespeicher, abgesehen von möglicherweise unterschiedlichen Alterungsprozessen, die gleiche Energiemenge speichern kann und bei gleichem Ladezustand gleich schnell entladen werden kann. Darüber hinaus wird nur ein bestimmter Typ des elektrischen Energiespeichers benötigt. Wie zuvor aufgezeigt, besteht jedoch grundsätzlich keine Beschränkung auf einen bestimmten Typ bzw. Zustand bei den verwendeten Energiespeichern.

Die hier im Hinblick auf eine von der Ladesäule umfasste Mehrzahl von elektrischen Energiespeichern genannten Merkmale und daraus resultierenden Vorteile lassen sich auch auf eine nicht von der erfindungsgemäßen Ladesäule umfassten Mehrzahl von elektrischen Energiespeichern übertragen. Da die erfindungsgemäße Ladesäule auch für technisch ungleiche elektrische Energiespeicher bzw. für elektrische Energiespeicher mit unterschiedlichem Ladezustand geeignet ist, kann beispielsweise der Betreiber der Ladesäule hinsichtlich der zuvor beschriebenen Parameter wie die maximal speicherbare Energie, Nennspannung usw. der jeweiligen elektrischen Energiespeicher frei wählen, welche elektrischen Energiespeicher er verwenden möchte, und auch elektrische Energiespeicher mit beispielsweise unterschiedlichem Ladezustand verwenden.

Vorzugsweise weist jedes einzelne Lademodul der erfindungsgemäßen Ladesäule jeweils genau drei galvanisch voneinander getrennte autarke Ladeeinheiten auf. Dabei ist z.B. jede der drei autarken Ladeeinheiten des ersten Lademoduls der ersten Ladeschaltung an jeweils zwei Phasen eines als Drehstromnetz ausgebildeten Speisestromnetzes oder an jeweils zumindest ein Photovoltaikmodul einer von dem Speisestromnetz umfassten Photovoltaikanlage elektrisch anschließbar.

Die Ladesäule kann somit einerseits an ein dreiphasiges Wechselstromnetz elektrisch angeschlossen sein. Der Anschluss der Ladesäule an ein dreiphasiges Wechselstromnetz hat u.a. den Vorteil, dass ein Neutralleiter nicht zwingend benötigt wird. Üblicherweise stehen für den Anschluss an das Wechselstromnetz Anschlüsse mit 400 VAC/32A zur Verfügung. Die bestimmte Mehrzahl von genau drei autarken Ladeeinheiten eines jeweiligen Lademoduls ist bei einem dreiphasigen Wechselstromnetz besonders vorteilhaft, da die einzelnen autarken Ladeeinheiten in diesem Fall gleichermaßen elektrischen Strom aus dem dreiphasigen Wechselstromnetz beziehen.

Ferner kann die erfindungsgemäße Ladesäule ergänzend oder alternativ auch an ein als Gleichstromnetz ausgebildetes Speisestromnetz elektrisch angeschlossen sein und somit zumindest teilweise oder auch ausschließlich Gleichstrom beziehen. Damit ist die Erfindung folglich insbesondere auch für den Einsatz im Rahmen der zukunftsweisenden, sogenannten DC-INDUSTRIE geeignet, so dass hierdurch unter Anderem Konvertierungsverluste aufgrund einer nicht benötigten Umwandlung von Wechselstrom in Gleichstrom vermieden werden können.

Die erfindungsgemäße Ladesäule kann andererseits auch an jeweils zumindest ein Photovoltaikmodul einer von dem Speisestromnetz umfassten Photovoltaikanlage elektrisch angeschlossen sein und somit ausschließlich Solarstrom beziehen. Eine solche Ladesäule, die zum Laden von Elektrofahrzeugen ausschließlich Solarstrom aus einer Photovoltaikanlage als elektrische Energiequelle bezieht, stellt eine umweltbewusste Alternative zu herkömmlichen Ladesäulen, die Strom aus einem Drehstromnetz beziehen, dar.

Eine Weiterbildung der vorliegenden Erfindung sieht vor, dass die Ladesäule mit einer Photovoltaikanlage, welche eine Mehrzahl von Photovoltaikmodulen umfasst, elektrisch verbindbar ist. Die einzelnen Photovoltaikmodule können technisch gleichermaßen oder auch unterschiedlich ausgebildet sein. Ergänzend oder alternativ ist gemäß einer weiteren Ausführungsform vorgesehen, dass die erste Ladeschaltung des ersten Lade-/Speicherstrangs ein zweites Lademodul mit der bestimmten Mehrzahl von elektrisch, insbesondere galvanisch voneinander getrennten autarken Ladeeinheiten aufweist. Jede der autarken Ladeeinheiten des zweiten Lademoduls ist auf deren Primärseite mit zumindest einem Photovoltaikmodul, vorzugsweise einer Vielzahl von in Reihe geschalteten Photovoltaikmodulen, elektrisch verbindbar und auf deren Sekundärseite mit jeweils genau einer der autarken Ladeeinheiten des ersten Lademoduls parallelgeschaltet.

Die Photovoltaikanlage ist mit der erfindungsgemäßen Ladesäule elektrisch verbindbar und kann beispielsweise auf dem Dach eines Carports bzw. Abstellplatzes, auf welchem das Elektrofahrzeug zum Aufladen der Fahrzeugbatterie geparkt wird, angebracht sein. Gemäß bekannter Photovoltaikanlagen umfasst die mit der Ladesäule elektrisch verbindbare Photovoltaikanlage eine Mehrzahl von Photovoltaikmodulen, in denen jeweils Solarzellen zusammengeschaltet sind. Die einzelnen Solarzellen wandeln die Strahlungsenergie der Sonne in elektrischen Strom um.

In Kombination dazu ist vorgesehen, dass die erste Ladeschaltung des ersten Lade-/Speicherstrangs ein zweites Lademodul umfasst, wobei sich das zweite Lademodul von dem ersten Lademodul lediglich dadurch unterscheidet, dass es im Betrieb der Ladesäule auf der Primärseite nicht mit einem wie vorstehend aufgezeigten Speisestromnetz, sondern mit einer Photovoltaikanlage elektrisch verbunden ist. Das zweite Lademodul umfasst ebenfalls die bestimmte Mehrzahl von autarken Ladeeinheiten, wobei jede einzelne dieser autarken Ladeeinheiten im Betrieb der Ladesäule auf der Primärseite jeweils an zumindest ein Photovoltaikmodul, vorzugsweise jedoch an eine Mehrzahl von in Reihe geschalteten Photovoltaikmodulen, d.h. an sogenannte Strings, angeschlossen ist. Somit kann den einzelnen autarken Ladeeinheiten des zweiten Lademoduls im Betrieb der Photovoltaikanlage elektrischer Strom aus der Photovoltaikanlage zugeführt werden. Vor dem Zuführen von elektrischem Strom zu den einzelnen elektrischen Energiespeichern im elektrisch angeschlossenen Zustand ist jede einzelne autarke Ladeeinheit auf deren Sekundärseite jeweils mit genau einer autarken Ladeeinheit des ersten Lademoduls, welches elektrischen Strom aus dem Speisestromnetz bezieht, parallelgeschaltet. Die einzelnen elektrischen Energiespeicher können somit zusätzlich zu elektrischem Strom aus dem Speisestromnetz über jeweils eine autarke Ladeeinheit des ersten Lademoduls auch mit elektrischem Strom aus Solarenergie über jeweils eine autarke Ladeeinheit des zweiten Lademoduls versorgt werden. Aufgrund des zusätzlich zur Verfügung stehenden elektrischen Stroms aus Solarenergie können die elektrischen Energiespeicher, sofern sie elektrisch angeschlossen sind und für entsprechend höhere Ladeströme ausgelegt sind, schneller aufgeladen werden. Dies wiederum kann sich positiv auf den Ladevorgang eines an den ersten Ladeanschluss anschließbaren Elektrofahrzeugs auswirken, insbesondere indem die Taktrate von an dem ersten Ladeanschluss ladbaren Elektrofahrzeugen erhöht werden kann.

Ferner können die elektrischen Energiespeicher im elektrisch angeschlossenen Zustand auch nur durch die autarken Ladeeinheiten des zweiten Lademoduls, und somit aus Solarenergie der Photovoltaikanlage, geladen werden. Ein Aufladen der elektrischen Energiespeicher nur aus der Photovoltaikanlage kann insbesondere bei entsprechend intensiver Sonneneinstrahlung von Relevanz sein. Auch kann vorgesehen sein, dass der Fahrer des Elektrofahrzeugs an der erfindungsgemäßen Ladesäule auswählen kann, ob er sein Elektrofahrzeug nur mit Strom aus dem Speisestromnetz, nur mit Solarstrom aus der Photovoltaikanlage, und somit der Umwelt zuliebe nur mit Ökostrom, oder mit einer Kombination aus beiden Stromquellen laden möchte. Zur Ermöglichung dieses Auswählens kann die erfindungsgemäße Ladesäule eine entsprechende Auswahleinrichtung, beispielsweise ein Bedienpanel oder anderweitige Bedienelemente wie Tasten, Drehknopf oder Schalter, aufweisen.

Die Erfindung sieht insbesondere vor, dass Primärseite und Sekundärseite jeder einzelnen autarken Ladeeinheit eines Lademoduls der Ladesäule galvanisch voneinander getrennt sind.

Da alle Lademodule der Ladesäule von ihrem technischen Aufbau her identisch zueinander sind und sich lediglich in ihrem Verwendungszweck in der Ladesäule unterscheiden, sind auch sämtliche autarke Ladeeinheiten der einzelnen Lademodule in ihrem technischen Aufbau identisch. Die galvanische Trennung von Primärseite und Sekundärseite jeder autarken Ladeeinheit stellt eine Schutztrennung zwischen dem an das Speisestromnetz angeschlossenen Primärstromkreis und einem Sekundärstromkreis sicher. Beispielsweise kann zur galvanischen Trennung ein von jeder einzelnen autarken Ladeeinheit umfasster Transformator vorgesehen sein, welcher die Eingangsspannung des Primärstromkreises in eine Ausgangsspannung des Sekundärstromkreises umwandelt.

Zudem kann jede einzelne autarke Ladeeinheit eines Lademoduls einen Leistungskorrekturfilter aufweisen und insbesondere als Schaltnetzteil ausgebildet sein. Leistungskorrekturfilter, auch unter dem Begriff der sog. Power Factor Correction (PFC) bekannt, sind elektrische Schaltungen zur Erhöhung des Leistungsfaktors, d.h. dem Verhältnis von Wirkleistung bzw. "tatsächlicher Leistung" zur Scheinleistung bzw. Gesamtleistung, und werden häufig in an das öffentliche Stromnetz angeschlossenen Schaltnetzteilen verwendet. Leistungskorrekturfilter dienen dem Schutz des Stromnetzes vor unnötigen Belastungen mit Störfrequenzen bzw. Oberschwingungen.

In einer weiteren Ausführungsform weist die erfindungsgemäße Ladesäule einen von dem ersten Lade-/Speicherstrang unabhängigen und elektrisch getrennten zweiten Lade-/Speicherstrang sowie einen zweiten Ladeanschluss zum elektrischen Gleichstromladen einer Batterie eines an den zweiten Ladeanschluss anschließbaren Elektrofahrzeugs auf. Der erste Lade-/Speicherstrang und der zweite Lade-/Speicherstrang sind auf deren Primärseite zum Einspeisen von elektrischer Energie aus dem Speisestromnetz zweckmäßigerweise parallelgeschaltet. Vorzugsweise gleicht der zweite Lade-/Speicherstrang in seinem technischen Aufbau dem ersten Lade-/Speicherstrang. In diesem Fall umfasst der zweite Lade-/Speicherstrang eine weitere erste Ladeschaltung entsprechend der ersten Ladeschaltung des ersten Lade-/Speicherstrangs sowie eine weitere zweite Ladeschaltung entsprechend der zweiten Ladeschaltung des ersten Lade-/Speicherstrangs. Die jeweiligen autarken Ladeeinheiten der weiteren ersten und der weiteren zweiten Ladeschaltung sind dementsprechend ebenfalls zum elektrischen Anschließen an elektrische Energiespeicher ausgebildet, wie dies bereits im Hinblick auf den ersten Lade-/Speicherstrang beschrieben wurde.

Die jeweils ersten Lademodule des ersten und des zweiten Lade-Speicherstrangs sind auf der Primärseite zweckmäßigerweise parallelgeschaltet, sodass jede der autarken Ladeeinheiten der jeweiligen ersten Lademodule im Betrieb der Ladesäule auf deren Primärseite mit dem Speisestromnetz elektrisch verbindbar ist und auf deren Sekundärseite an jeweils genau einen elektrischen Energiespeicher elektrisch anschließbar ist. Die autarken Ladeeinheiten der Lademodule der weiteren zweiten Ladeschaltung des zweiten Lade-/Speicherstrangs sind zweckmäßigerweise auf deren Sekundärseite parallelgeschaltet und nach deren Parallelschaltung zum Versorgen des zweiten Ladeanschlusses mit elektrischer Energie mit dem zweiten Ladeanschluss elektrisch verbunden.

Auf diese Weise können zwei Elektrofahrzeuge gleichzeitig an der erfindungsgemäßen Ladesäule mit Gleichstrom aus dem Speisestromnetz aufgeladen werden. Der erste und zweite Lade-/Speicherstrang teilen sich die aus dem Speisestromnetz beziehbare elektrische Energie, sind jedoch vollständig voneinander galvanisch isoliert und stellen dem ersten bzw. zweiten Ladeanschluss unabhängig voneinander elektrischen Strom zur Verfügung.

Umfasst die erfindungsgemäße Ladesäule einen ersten und einen zweiten Lade-/Speicherstrang und ist zudem mit einer Photovoltaikanlage elektrisch verbindbar, so sind verschiedene Ausführungsvarianten denkbar. Beispielsweise können die jeweiligen autarken Ladeeinheiten der ersten Lademodule des ersten und des zweiten Lade-/Speicherstrangs auf deren Primärseite parallelgeschaltet sein und an ein Speisestromnetz sowie an eine Photovoltaikanlage elektrisch angeschlossen sein, um elektrische Energie sowohl aus dem Speisestromnetz als auch aus der Photovoltaikanlage zu beziehen. Weiterhin kann das erste Lademodul des ersten Lade-/Speicherstrangs über deren autarken Ladeeinheiten elektrische Energie aus dem Speisestromnetz und das erste Lademodul des zweiten Lade-/Speicherstrangs über deren jeweiligen autarken Ladeeinheiten elektrische Energie aus der Photovoltaikanlage beziehen. Zudem kann der erste und/oder der zweite Lade-/Speicherstrang ein zweites Lademodul der ersten bzw. der weiteren ersten Ladeschaltung aufweisen, wobei das jeweilige erste Lademodul elektrische Energie aus dem Speisestromnetz und das jeweilige zweite Lademodul elektrische Energie aus der Photovoltaikanlage bezieht und das erste und zweite Lademodul des jeweiligen Lade-/Speicherstrangs auf deren Sekundärseite parallelgeschaltet sind. Demnach können nicht nur zwei Elektrofahrzeuge über den ersten und zweiten Ladeanschluss und dem entsprechenden ersten und zweiten Lade-/Speicherstrang aus dem Speisestromnetz, sondern zusätzlich noch mit von der Photovoltaikanlage erzeugtem elektrischem Strom aus Solarenergie geladen werden.

Ein erstes Lademodul einer ersten Ladeschaltung kann über dessen autarke Ladeeinheiten erfindungsgemäß nicht nur an verschiedene Arten von Speisestromnetzen, sondern auch an mehrere Speisestromnetze elektrisch angeschlossen werden. Aufgrund des modularen Charakters der erfindungsgemäßen Ladesäule sind eine Vielzahl von möglichen Ausgestaltungen der Ladesäule von der Erfindung umfasst, auch wenn diese der Übersichtlichkeit halber nicht alle explizit erwähnt und beschrieben sind.

Weiterhin kann die Ladesäule eine Steuerungseinheit zum Steuern und Überwachen der ersten und zweiten Ladeschaltung des ersten Lade-/Speicherstrangs, vorzugsweise der einzelnen autarken Ladeeinheiten der jeweiligen Lademodule, sowie der elektrischen Energiespeicher im elektrisch angeschlossenen Zustand aufweisen. Über die Steuerungseinheit können beispielsweise die Ladezustände der einzelnen elektrischen Energiespeicher im elektrisch angeschlossenen Zustand überprüft und kann einer Überladung oder Tiefentladung der einzelnen elektrischen Energiespeicher entgegengesteuert werden. Zudem können die einzelnen autarken Ladeeinheiten der Lademodule über Steuersignale gesteuert und überwacht werden. Ist ein elektrischer Energiespeicher im elektrisch angeschlossenen Zustand beispielsweise voll aufgeladen, kann die Steuerungseinheit die dem elektrischen Energiespeicher vorgeschaltete autarke Ladeeinheit z.B. zum Öffnen eines Relais ansteuern, sodass dem elektrischen Energiespeicher kein elektrischer Strom mehr von der autarken Ladeeinheit zugeführt werden kann.

Weiterhin umfasst die vorliegende Erfindung auch eine Ladestation mit einer Mehrzahl von Ladesäulen gemäß einer der zuvor beschriebenen, von der Erfindung umfassten Ausführungsformen.

Insgesamt stellt der erfindungsgemäße Gegenstand somit Lösungen betreffend eine Ladesäule zum elektrischen Gleichstromladen einer Batterie eines Elektrofahrzeugs bereit, welche einerseits ein schnelles Aufladen einer Batterie eines Elektrofahrzeugs mit hohen Ladeleistungen und andererseits eine einfache und flexible Installation ermöglicht und dabei gleichzeitig derart ausgebildet ist, dass auf eine Symmetrierung von Akkus eines Zwischenspeichers verzichtet werden kann.

Weitere Vorteile, Merkmale und Anwendungsmöglichkeiten der vorliegenden Erfindung werden anhand der folgenden Beschreibung von Ausführungsformen davon sowie der dazugehörigen Figuren deutlich. Es zeigen:
- Figur 1:: eine erste Ausführungsform einer erfindungsgemäßen Ladesäule,
- Figur 2:: eine zweite Ausführungsform einer erfindungsgemäßen Ladesäule.

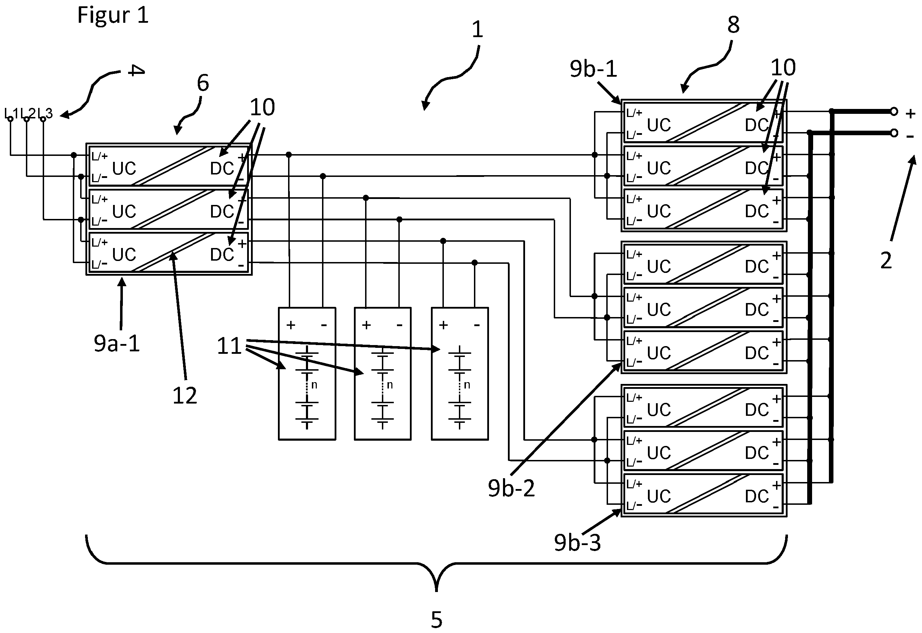

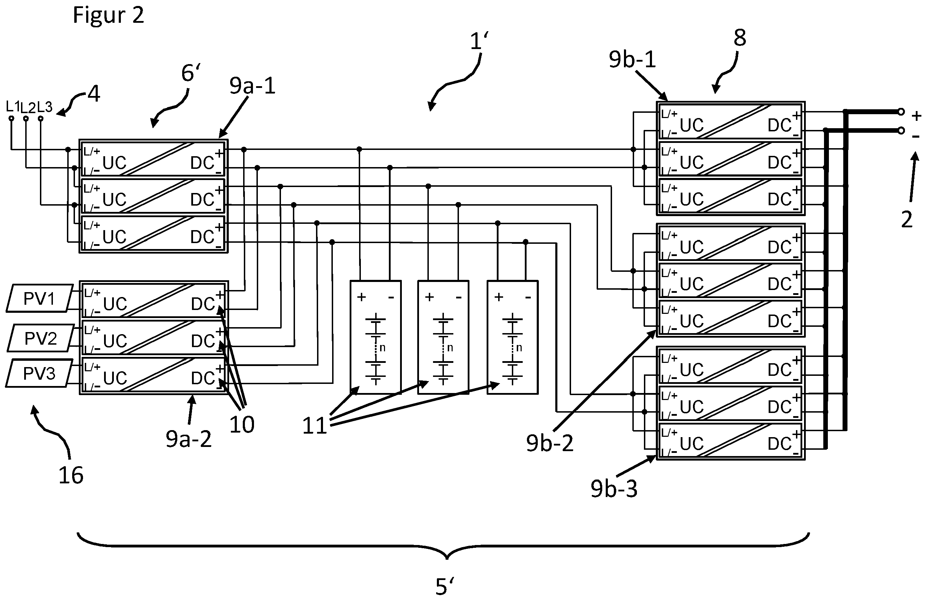

Die Figuren 1 und 2 zeigen zwei bevorzugte beispielhafte Ausführungsformen von Ladesäulen 1, 1' gemäß der Erfindung. Jedoch umfasst die Erfindung noch eine Vielzahl von weiteren, nicht in den Figuren dargestellten Ausführungsformen, welche aus dem modularen Charakter der erfindungsgemäßen Ladesäule resultieren.

Die in Figuren 1 und 2 jeweils gezeigte Ladesäule 1, 1' besitzt einen ersten Ladeanschluss 2 zum elektrischen Gleichstromladen einer Batterie eines an den ersten Ladeanschluss 2 anschließbaren, jedoch in den Figuren aus Gründen der Übersichtlichkeit nicht dargestellten Elektrofahrzeugs. Weiterhin weist die Ladesäule 1, 1' gemäß Figur 1 und 2 jeweils einen ersten Lade-/Speicherstrang 5, 5' auf, welcher mit dem ersten Ladeanschluss 2 elektrisch verbunden ist und mit zumindest einem elektrischen Energiespeicher 11, in Figuren 1 und 2 drei elektrische Energiespeicher 11, elektrisch koppelbar ist. Der erste Lade-/Speicherstrang 5, 5' umfasst eine erste Ladeschaltung 6, 6' zum Laden der drei Energiespeicher 11 mit elektrischer Energie aus einem Speisestromnetz 4, sowie eine zweite Ladeschaltung 8 zum Laden der Batterie eines an dem ersten Ladeanschluss 2 anschließbaren Elektrofahrzeugs mit elektrischer Energie.

Jede der in Figuren 1 und 2 dargestellten Ladesäulen 1, 1' zeichnet sich dadurch aus, dass sie modular aufgebaut ist, indem sie eine Vielzahl von technisch identischen Lademodulen 9a-1, 9a-2, 9b-1, 9b-2, 9b-3 aufweist. Jedes einzelne Lademodul 9a-1, 9a-2, 9b-1, 9b-2, 9b-3 wiederum umfasst eine bestimmte Mehrzahl von elektrisch, insbesondere galvanisch voneinander getrennten autarken Ladeeinheiten 10 und jede einzelne autarke Ladeeinheit 10 weist eine Umwandlungseinrichtung 12 zum Umwandeln einer Eingangsspannung in eine Ausgangsgleichspannung auf. Die Umwandlungseinrichtung 12 jeder einzelnen autarken Ladeeinheit 10 ist in der in Figuren 1 und 2 dargestellten Ausführungsform jeweils beispielhaft zum Umwandeln sowohl einer Gleichspannung als auch einer Wechselspannung in Gleichspannung ausgebildet. Daher kann die Umwandlungseinrichtung 12 eine als Eingangsspannung vorliegende sogenannte Universalspannung (UC = Universal Current) in eine Gleichspannung (DC = Direct Current) als Ausgangsspannung umwandeln. In einer weiteren, nicht in den Figuren gezeigten Ausführungsform kann die Umwandlungseinrichtung jedoch beispielsweise auch dazu ausgebildet sein, eine Eingangswechselspannung in eine Ausgangsgleichspannung umzuwandeln, z.B. wenn das Speisestromnetz 4 ein Wechselstromnetz ist.

Die erste Ladeschaltung 6, 6' der in den Figuren 1 und 2 jeweils dargestellten Ladesäule 1, 1' besitzt zumindest ein erstes Lademodul 9a-1 und die zweite Ladeschaltung 8 besitzt eine Mehrzahl von Lademodulen 9b-1, 9b-2, 9b-3. Auf die Unterschiede der Ladesäule 1 gemäß Figur 1 und der Ladesäule 1' gemäß Figur 2 wird im Folgenden noch genauer eingegangen. Die Mehrzahl der Lademodule 9b-1, 9b-2, 9b-3 der zweiten Ladeschaltung 8 ist stets gleich der bestimmten Mehrzahl von elektrisch, insbesondere galvanisch voneinander getrennten autarken Ladeeinheiten 10 eines jeweiligen Lademoduls 9a-1, 9a-2, 9b-1, 9b-2, 9b-3. In der in Figuren 1 und 2 gezeigten Ausführungsform einer erfindungsgemäßen Ladesäule 1, 1' ist diese bestimmte Mehrzahl von elektrisch, insbesondere galvanisch voneinander getrennten autarken Ladeeinheiten 10 eines jeweiligen Lademoduls 9a-1, 9a-2, 9b-1, 9b-2, 9b-3 gleich drei, d.h. jedes einzelne Lademodul 9a-1, 9a-2, 9b-1, 9b-2, 9b-3 der Ladesäule 1, 1' weist jeweils genau drei elektrisch, insbesondere galvanisch voneinander getrennte autarke Ladeeinheiten 10 auf. Demzufolge umfasst die zweite Ladeschaltung 8 der Ladesäule 1, 1' in Figuren 1 und 2 jeweils drei Lademodule 9b-1, 9b-2, 9b-3. Somit ist der erste Lade-/Speicherstrang 5, 5' der Ladesäule 1, 1' in drei zueinander identische, unabhängige und elektrisch voneinander isolierte Teilstränge untergliedert, wie aus Figuren 1 und 2 hervorgeht. Weiterhin ist jede der drei autarken Ladeeinheiten 10 des ersten Lademoduls 9a-1 der ersten Ladeschaltung 6, 6' gemäß Figur 1 und 2 beispielhaft an jeweils zwei Phasen eines als Drehstromnetz ausgebildeten Speisestromnetzes 4 angeschlossen, wobei das Drehstromnetz als solches nicht dargestellt ist. Bei einem als Drehstromnetz ausgebildeten Speisestromnetz 4 ermöglicht die Untergliederung des ersten Lade-/Speicherstrangs 5, 5' in drei -oder auch ein Vielfaches von drei- Teilstränge eine möglichst gleichmäßige Auslastung des Drehstromnetzes 4 und ist daher besonders vorteilhaft.

In weiteren, nicht dargestellten Ausführungsformen der erfindungsgemäßen Ladesäule können jedoch auch zwei oder mehr als drei autarke Ladeeinheiten pro Lademodul vorgesehen sein, sodass eine Untergliederung des ersten Lade-/Speicherstrangs 5, 5' in lediglich zwei Teilstränge oder aber in mehr als drei Teilstränge erfolgen kann.

Auch können die einzelnen autarken Ladeeinheiten des ersten Lademoduls in einer weiteren Ausführungsform an ein anderes Speisestromnetz als an ein Drehstromnetz elektrisch angeschlossen sein. Beispielsweise können jeweils zwei Phasen jeder einzelnen autarken Ladeeinheit des ersten Lademoduls an jeweils zumindest ein Photovoltaikmodul einer von dem Speisestromnetz umfassten Photovoltaikanlage, oder auch an ein beliebiges anderes Gleichstromnetz, elektrisch angeschlossen sein.

Wie in Figuren 1 und 2 zu sehen, ist jede autarke Ladeeinheit 10 des ersten Lademoduls 9a-1 der ersten Ladeschaltung im Betrieb der Ladesäule 1, 1' auf deren Primärseite mit dem Speisestromnetz 4 elektrisch verbunden sowie auf deren Sekundärseite zum elektrischen Anschließen mit jeweils genau einem elektrischen Energiespeicher 11 und im elektrisch angeschlossenen Zustand des elektrischen Energiespeichers 11 zum Aufladen dieses elektrischen Energiespeichers 11 mit elektrischer Energie aus dem Speisestromnetz 4 ausgebildet. Ferner sind alle autarken Ladeeinheiten 10 eines jeweiligen Lademoduls 9b-1, 9b-2, 9b-3 der Mehrzahl von Lademodulen 9b-1, 9b-2, 9b-3 der zweiten Ladeschaltung 8 auf deren Primärseite jeweils gemeinsam zum Anschließen an genau einen elektrischen Energiespeicher 11 und im elektrisch angeschlossenen Zustand zum Beziehen von elektrischer Energie aus diesem einen elektrischen Energiespeicher 11 ausgebildet. Die einzelnen mit der Ladesäule 1, 1' elektrisch koppelbaren elektrischen Energiespeicher 11 haben die Funktion eines Zwischenspeichers für elektrische Energie und sind Batterien, können jedoch auch beispielsweise Akkumulatoren bzw. Akkus sein.

Gemäß Figuren 1 und 2 umfasst die Ladesäule 1, 1' eine Mehrzahl von drei elektrischen Energiespeichern 11. Jeder elektrische Energiespeicher 11 ist an jeweils eine autarke Ladeeinheit 10 des ersten Lademoduls 9a-1 der ersten Ladeschaltung 6, 6' sowie an alle autarke Ladeeinheiten 10 eines jeweiligen Lademoduls 9b-1, 9b-2, 9b-3 der Mehrzahl von Lademodulen 9b-i (i = 1, 2, 3) der zweiten Ladeschaltung 8 elektrisch angeschlossen. In einer weiteren Ausführungsform sind auch weniger als drei elektrische Energiespeicher 11 möglich, beispielsweise, wenn bereits ein elektrischer Energiespeicher 11 oder zwei elektrische Energiespeicher 11 zur Zwischenspeicherung von elektrischer Energie ausreichen.

Zudem sind auch Ausführungsformen von der Erfindung umfasst, bei denen die zuvor beschriebene Mehrzahl von elektrischen Energiespeichern 11 nicht von der erfindungsgemäßen Ladesäule umfasst ist, sondern beispielsweise von dem Betreiber der Ladesäule in Abhängigkeit von den mit der Ladesäule zu ladenden Elektrofahrzeugbatterien in die Ladesäule eingebaut bzw. mit der Ladesäule elektrisch gekoppelt werden kann.

Wie in den Figuren 1 und 2 gezeigt, sind die autarken Ladeeinheiten 10 der jeweiligen Lademodule 9b-1, 9b-2, 9b-3 der zweiten Ladeschaltung 8 auf deren Sekundärseite parallelgeschaltet und nach deren Parallelschaltung mit dem ersten Ladeanschluss 2 elektrisch verbunden. In Zusammenschau mit dem zuvor bereits beschriebenen technischen Aufbau der Ladesäule 1, 1' hat dies den bedeutenden Vorteil, dass im elektrisch angeschlossenen Zustand der elektrischen Energiespeicher 11 keine Ausgleichsströme zwischen den jeweiligen elektrischen Energiespeichern 11 fließen können, da diese galvanisch voneinander getrennt sind. Somit ist keine aufwändige Symmetrierung der elektrischen Energiespeicher 11 bzw. ein beispielsweise mittels Batteriemanagement gesteuertes Ausgleichen von Ladungsunterschieden der elektrischen Energiespeicher 11 erforderlich, wodurch sich die Komplexität der Steuerungs- und Regelungstechnik bzw. des Batteriemanagements für die elektrischen Energiespeicher 11 reduziert. Nach erfolgter und zuvor beschriebener Parallelschaltung aller autarker Ladeeinheiten 10 der einzelnen Lademodule 9b-1, 9b-2, 9b-3 kann dem ersten Ladeanschluss 2 somit die Summe der elektrischen Energie, die in den einzelnen jeweils elektrisch angeschlossenen elektrischen Energiespeichern 11 gespeichert ist, gleichzeitig zur Verfügung gestellt werden, ohne dass irgendwelchen auftretenden Ausgleichsströmen entgegengewirkt werden muss. Ein weiterer Vorteil liegt darin, dass die elektrischen Energiespeicher 11 auch im Fall von z.B. unterschiedlichen Alterungsprozessen weiterverwendet werden können, ohne den Nachteil eines Ausgleichens von Ladungszuständen oder sogar eines Wechsels des elektrischen Energiespeichers 11 in Kauf nehmen zu müssen.

Durch den modularen Aufbau der erfindungsgemäßen Ladesäule 1, 1' gemäß Figuren 1 und 2 umfassend eine Vielzahl von technisch identischen Lademodulen 9a-1, 9a-2, 9b-1, 9b-2, 9b-3 einerseits und durch die auf der Sekundärseite erfolgende Parallelschaltung aller autarker Ladeeinheiten 10 der zweiten Ladeschaltung 8 andererseits wird ein schnelles Laden eines an den ersten Ladeanschluss 2 anschließbaren Elektrofahrzeugs mit Gleichstrom ermöglicht. Weiterhin kann die in Figuren 1 und 2 gezeigte Ladesäule 1, 1' in einer weiteren Ausführungsform durch Hinzufügen von weiteren Lademodulen auf einfache Weise sehr flexibel an die zu ladende Batterie eines anschließbaren Elektrofahrzeugs angepasst werden. Aufgrund des modularen Aufbaus verringert sich die Komplexität der Ladesäule 1, 1', da die Ladesäule 1, 1' neben dem ersten Ladeanschluss lediglich aus einer Mehrzahl von technisch identischen Lademodulen 9a-1, 9a-2, 9b-1, 9b-2, 9b-3 mit jeweils identischen autarken Ladeeinheiten 10, sowie optional wie in Figur 1 und 2 aus einer Mehrzahl von elektrischen Energiespeichern 11, besteht. Aufgrund der verringerten Komplexität der erfindungsgemäßen Ladesäule 1, 1' im Vergleich zu Ladesäulen gemäß dem Stand der Technik können die Herstellungskosten deutlich gesenkt werden. Insbesondere bei gegenüber Wechselstrom-Ladesäulen sehr teuren Gleichstrom-Ladesäulen stellt dies einen entscheidenden Vorteil dar.

Da der technische Aufbau der in Figuren 1 und 2 gezeigten Ladesäulen 1, 1' derart ausgestaltet ist, dass die elektrischen Energiespeicher 11 galvanisch voneinander getrennt sind und somit keine Ausgleichsströme zwischen den elektrischen Energiespeichern 11 fließen können, können die elektrischen Energiespeicher 11 hinsichtlich zumindest einer Größe aus der Gruppe von ihrer maximal speicherbaren Energie, ihrer Nennspannung, ihres maximalen Lade- und Entladestroms und ihres Ladezustands verschieden sein. Folglich steht eine größere Auswahl an verwendbaren elektrischen Energiespeichern 11 als Zwischenspeicher für die Ladesäule 1, 1' zur Verfügung.

Die elektrischen Energiespeicher 11 können jedoch auch, abgesehen von möglicherweise unterschiedlichen Alterungsprozessen, technisch gleich sein und die gleiche maximal speicherbare Energie, Nennspannung und den gleichen maximalen Lade- und Entladestrom aufweisen. In diesem Fall wird nur ein bestimmter Typ des elektrischen Energiespeichers 11 benötigt, was die Installation der Ladesäule 1' vereinfachen kann.

Der modulare Aufbau des in Figur 1 beispielhaft dargestellten ersten Lade-/Speicherstrangs 5 der Ladesäule 1 sieht vor, dass die erste Ladeschaltung 6 genau ein Lademodul, nämlich ein erstes Lademodul 9a-1, aufweist. Jede autarke Ladeeinheit 10 des ersten Lademoduls 9a-1 ist im Betrieb der Ladesäule 1 auf deren Primärseite mit dem beispielhaft als Drehstromnetz ausgebildeten Speisestromnetz 4 elektrisch verbunden und auf deren Sekundärseite an jeweils genau einen elektrischen Energiespeicher 11 elektrisch angeschlossen.

Die in Figur 2 gezeigte zweite Ausführungsform einer erfindungsgemäßen Ladesäule 1' unterscheidet sich von der in Figur 1 dargestellten Ladesäule 1 dadurch, dass die erste Ladeschaltung 6' im Gegensatz zu der in Figur 1 gezeigten Ladesäule 1 zwei Lademodule aufweist, d.h. neben dem ersten Lademodul 9a-1 ein zweites Lademodul 9a-2 umfasst. Das erste und das zweite Lademodul 9a-1, 9a-2 umfassen beispielhaft jeweils drei autarke Ladeeinheiten 10, welche auf deren Sekundärseite derart parallelgeschaltet sind, dass jeweils eine autarke Ladeeinheit 10 des ersten Lademoduls 9a-1 und eine autarke Ladeeinheit 10 des zweiten Lademoduls 9a-2 an genau einen elektrischen Energiespeicher 11 elektrisch angeschlossen sind.

Im Gegensatz zu dem ersten Lademodul 9a-1 sind die autarken Ladeeinheiten 10 des zweiten Lademoduls 9a-2 jedoch auf deren Primärseite an in Reihe geschaltete Photovoltaikmodule einer Photovoltaikanlage 16, sogenannte Strings, angeschlossen, und nicht an jeweils zwei Phasen des Speisestromnetzes 4. Gemäß der in Figur 2 gezeigten Ausführungsform ist die Photovoltaikanlage 16 mit der Ladesäule 1' elektrisch verbunden. Es sind jedoch auch Ausführungsformen möglich, bei denen die Ladesäule eine Photovoltaikanlage 16 umfasst, wobei beispielsweise einzelne Photovoltaikmodule an der Ladesäule angeordnet sind. Während die autarken Ladeeinheiten 10 des ersten Lademoduls 9a-1 elektrischen Strom aus dem Speisestromnetz 4 beziehen, beziehen die autarken Ladeeinheiten 10 des zweiten Lademoduls 9a-2 elektrischen Strom aus den Photovoltaikmodulen der Photovoltaikanlage 16.

Gemäß der in Figur 2 dargestellten erfindungsgemäßen Ladesäule 1' können die elektrischen Energiespeicher 11 demnach vorteilhafterweise zusätzlich zu elektrischem Strom aus dem Speisstromnetz 4 noch mit elektrischem Strom aus Solarenergie geladen werden und somit je nach Sonneneinstrahlung im Vergleich zu der gemäß Figur 1 ausgebildeten Ladesäule 1 schneller aufgeladen werden, vorausgesetzt, dass die elektrischen Energiespeicher 11 für entsprechend höhere Ladeströme ausgelegt sind. Dies wiederum kann sich positiv auf den Ladevorgang eines an den ersten Ladeanschluss 2 anschließbaren Elektrofahrzeugs auswirken, insbesondere indem die Taktrate von an dem ersten Ladeanschluss 2 ladbaren Elektrofahrzeugen erhöht werden kann.

Ferner können die elektrischen Energiespeicher 11 auch nur durch die autarken Ladeeinheiten 10 des zweiten Lademoduls 9a-2, und somit aus Solarenergie der Photovoltaikanlage 16, geladen werden, beispielsweise, wenn elektrische Energie aus dem Speisestromnetz 4 wegen eines Zusammenbrechens des Speisestromnetzes 4 nicht zur Verfügung steht. Ein Aufladen der elektrischen Energiespeicher 11 nur aus der Photovoltaikanlage 16 kann auch insbesondere bei entsprechend intensiver Sonneneinstrahlung von Relevanz sein, z.B. um das Speisestromnetz 4 nicht zu überlasten oder um Kosten zu sparen.

Auch kann in einer weiteren, nicht dargestellten Ausführungsform der Erfindung vorgesehen sein, dass die erfindungsgemäße Ladesäule eine entsprechende Auswahleinrichtung, beispielsweise ein Bedienpanel oder anderweitige Bedienelemente wie Tasten, Drehknopf oder Schalter, aufweist. Mit Hilfe der Auswahleinrichtung kann der Fahrer des Elektrofahrzeugs an der erfindungsgemäßen Ladesäule auswählen, ob er sein Elektrofahrzeug nur mit Wechselstrom aus dem Stromnetz, nur mit Solarstrom aus der Photovoltaikanlage, und somit der Umwelt zuliebe nur mit Ökostrom, oder mit einer Kombination aus beiden Stromquellen laden möchte.

Auch wenn aus Gründen der Übersichtlichkeit nicht dargestellt, so kann die in Figuren 1 und 2 gezeigte Ladesäule 1, 1' ferner jeweils eine Steuerungseinheit zum Steuern und Überwachen der einzelnen Bauelemente des ersten Lade-/Speicherstrangs 5, 5', d.h. der autarken Ladeeinheiten 10 der jeweiligen Lademodule 9a-1, 9a-2, 9b-1, 9b-2, 9b-3 der ersten und zweiten Ladeschaltung 6, 8 und auch der einzelnen elektrischen Energiespeicher 11, aufweisen. Eine solche Steuerungseinheit kann insbesondere die Ladezustände der einzelnen elektrischen Energiespeicher 11 überprüfen und bei einer drohenden Überladung oder Tiefentladung der einzelnen elektrischen Energiespeicher 11 über entsprechende Steuersignale entgegensteuern. Im Falle eines vollständig aufgeladenen elektrischen Energiespeichers 11 kann die Steuerungseinheit die dem elektrischen Energiespeicher 11 vorgeschaltete autarke Ladeeinheit 10 z.B. zum Öffnen eines Relais ansteuern und dadurch eine weitere Stromzufuhr zu dem elektrischen Energiespeicher 11 unterbinden.

Gemäß einer weiteren, in den Figuren nicht dargestellten Ausführungsform kann die erfindungsgemäße Ladesäule einen von dem ersten Lade-/Speicherstrang 5, 5' unabhängigen und elektrisch getrennten zweiten Lade-/Speicherstrang sowie einen zweiten Ladeanschluss zum elektrischen Gleichstromladen einer Batterie eines an den zweiten Ladeanschluss anschließbaren Elektrofahrzeugs aufweisen. Der erste Lade-/Speicherstrang 5, 5' und der zweite Lade-/Speicherstrang sind auf deren Primärseite zum Einspeisen von elektrischer Energie aus dem Speisestromnetz 4 parallelgeschaltet. Vorzugsweise gleicht ein solcher zweiter Lade-/Speicherstrang in seinem technischen Aufbau dem ersten Lade-/Speicherstrang 5, 5'.

Primärseite und Sekundärseite jeder einzelnen autarken Ladeeinheit 10 eines Lademoduls 9a-1, 9a-2, 9b-1, 9b-2, 9b-3 sind in Figuren 1 und 2 beispielhaft galvanisch voneinander getrennt, angedeutet durch die zwei diagonalen, parallel zueinander verlaufenden Striche. Die galvanische Trennung sorgt für eine Schutztrennung zwischen einem Primärstromkreis, im Falle des ersten Lademoduls 9a-1 dem an das Speisestromnetz 4 angeschlossenen Primärstromkreis, und einem Sekundärstromkreis und kann beispielsweise mit Hilfe eines Transformators bewirkt werden. Die galvanische Trennung in den einzelnen Ladeeinheiten 10 gewährleistet u.a. eine zwingend vorgeschriebene galvanische Isolation von zwei oder mehr Elektrofahrzeugen, welche an der gleichen Ladesäule, jedoch über verschiedene Ladeanschlüsse, geladen werden.

Jede einzelne autarke Ladeeinheit 10 des ersten Lademoduls 9a-1 kann einen Leistungskorrekturfilter, auch Power Factor Correction (PFC) genannt, aufweisen, der jedoch in den Figuren 1 und 2 der Übersichtlichkeit halber nicht gezeigt ist, und kann als Schaltnetzteil ausgebildet sein. Leistungskorrekturfilter sind elektronische Schaltungen, welche dem Schutz des Stromnetzes vor unnötigen Belastungen mit Störfrequenzen bzw. Oberschwingungen dienen.

Auch wenn in den Figuren nicht explizit dargestellt, so umfasst die vorliegende Erfindung weiterhin eine Ladestation, welche eine Mehrzahl von Ladesäulen 1, 1' gemäß einer von der Erfindung umfassten Ausführungsformen aufweist.

Aus vorstehender Beschreibung ist ferner offensichtlich, dass ein weiterer Vorteil der erfindungsgemäß eingesetzten Lademodule darin besteht, dass diese in einer weiteren Anwendung grundsätzlich jeweils auch einzeln, oder auch mehrere parallel betriebene Lademodule, an ein Speisenetz, z.B. das Speisestromnetz 4, angeschlossen und direkt mit einem Ausgang, z.B. dem Ladeanschluss 2, zum Laden der Batterie eines daran anschließbaren bzw. angeschlossenen Elektrofahrzeugs benutzt werden kann, also auch ohne zwischengeschaltete Energiespeicher, insbesondere Pufferbatterie.

### Bezugszeichenliste

- 1, 1': Ladesäule
- 2: erster Ladeanschluss
- 4: Speisestromnetz
- 5, 5': erster Lade-/Speicherstrang
- 6, 6': erste Ladeschaltung
- 8: zweite Ladeschaltung
- 9a-1, 9a-2: erstes, zweites Lademodul der ersten Ladeschaltung
- 9b-i, i=1,...,n: Lademodul der zweiten Ladeschaltung
- 10: autarke Ladeeinheit
- 11: elektrischer Energiespeicher
- 12: Umwandlungseinrichtung UC->DC
- 16: Photovoltaikanlage

## Patentansprüche

1. Ladesäule (1, 1') mit einem ersten Ladeanschluss (2) zum elektrischen Gleichstromladen einer Batterie eines an den ersten Ladeanschluss (2) anschließbaren Elektrofahrzeugs, wobei die Ladesäule (1, 1') einen ersten Lade-/Speicherstrang (5, 5') besitzt, welcher
- mit dem ersten Ladeanschluss (2) elektrisch verbunden ist,
- mit zumindest einem elektrischen Energiespeicher (11) elektrisch koppelbar ist und zumindest
- eine erste Ladeschaltung (6, 6') zum Laden des zumindest einen elektrischen Energiespeichers (11) im elektrisch gekoppelten Zustand mit elektrischer Energie aus einem Speisestromnetz (4) sowie
- eine zweite Ladeschaltung (8a) zum Laden der Batterie eines an dem ersten Ladeanschluss (2) anschließbaren Elektrofahrzeugs mit elektrischer Energie umfasst,
**dadurch gekennzeichnet, dass**
die Ladesäule (1, 1') derart modular aufgebaut ist, dass sie eine Vielzahl von technisch identischen Lademodulen (9a-i, 9b-i) aufweist, wobei jedes einzelne Lademodul (9a-i, 9b-i) eine bestimmte Mehrzahl von elektrisch voneinander getrennten autarken Ladeeinheiten (10) umfasst und jede einzelne autarke Ladeeinheit (10) eine Umwandlungseinrichtung (12) zum Umwandeln einer Eingangsspannung in eine Ausgangsgleichspannung aufweist,
wobei die erste Ladeschaltung (6, 6') ein erstes Lademodul (9a-1) und die zweite Ladeschaltung (8) eine Mehrzahl von Lademodulen (9b-i) besitzt,
sodass die Mehrzahl der Lademodule (9b-i) der zweiten Ladeschaltung (8) gleich der bestimmten Mehrzahl von elektrisch voneinander getrennten autarken Ladeeinheiten (10) eines jeweiligen Lademoduls (9a-i, 9b-i) ist,
wobei
- jede autarke Ladeeinheit (10) des ersten Lademoduls (9a-1) der ersten Ladeschaltung (6, 6') im Betrieb der Ladesäule (1, 1') auf deren Primärseite mit dem Speisestromnetz (4) elektrisch verbindbar ist und auf deren Sekundärseite zum elektrischen Anschließen an jeweils genau einen elektrischen Energiespeicher (11) und im elektrisch angeschlossenen Zustand zum Aufladen dieses elektrischen Energiespeichers (11) mit elektrischer Energie aus dem Speisestromnetz (4) ausgebildet ist,
- alle autarken Ladeeinheiten (10) eines jeweiligen Lademoduls (9b-1, 9b-2, 9b-3) der Mehrzahl von Lademodulen (9b-i) der zweiten Ladeschaltung (8) auf deren Primärseite jeweils gemeinsam zum Anschließen an genau einen elektrischen Energiespeicher (11) und im elektrisch angeschlossenen Zustand zum Beziehen von elektrischer Energie aus diesem einen elektrischen Energiespeicher (11) ausgebildet sind und
- die autarken Ladeeinheiten (10) der Lademodule (9b-i) der zweiten Ladeschaltung (8) auf deren Sekundärseite parallelgeschaltet und nach deren Parallelschaltung mit dem ersten Ladeanschluss (2) elektrisch verbunden sind.

2. Ladesäule (1, 1') gemäß Anspruch 1, **dadurch gekennzeichnet, dass** die Umwandlungseinrichtung (12) jeder einzelnen autarken Ladeeinheit (10) zum Umwandeln sowohl einer Gleichspannung als auch einer Wechselspannung in Gleichspannung ausgebildet ist.

3. Ladesäule (1, 1') gemäß Anspruch 1 oder 2, **dadurch gekennzeichnet, dass** die Ladesäule (1, 1') eine Mehrzahl von elektrischen Energiespeichern (11) aufweist, wobei jeder elektrische Energiespeicher (11) der Mehrzahl von elektrischen Energiespeichern (11) an jeweils eine autarke Ladeeinheit (10) des ersten Lademoduls (9a-1) der ersten Ladeschaltung (6, 6') sowie an alle autarke Ladeeinheiten (10) eines jeweiligen Lademoduls (9b-1, 9b-2, 9b-3) der Mehrzahl von Lademodulen (9b-i) der zweiten Ladeschaltung (8) elektrisch angeschlossen ist.

4. Ladesäule (1, 1') gemäß Anspruch 3, **dadurch gekennzeichnet, dass** die elektrischen Energiespeicher (11) hinsichtlich zumindest einer Größe aus der Gruppe von ihrer maximal speicherbaren Energie, ihrer Nennspannung, ihres maximalen Lade- und Entladestroms und ihres Ladezustands verschieden sind.

5. Ladesäule (1, 1') gemäß einem der Ansprüche 1-4, **dadurch gekennzeichnet, dass** jedes einzelne Lademodul (9a-i, 9b-i) jeweils genau drei elektrisch voneinander getrennte autarke Ladeeinheiten (10) aufweist, wobei jede der drei autarken Ladeeinheiten (10) des ersten Lademoduls (9a-1) der ersten Ladeschaltung (6, 6') an jeweils zwei Phasen eines als Drehstromnetz ausgebildeten Speisestromnetzes (4) oder an jeweils zumindest ein Photovoltaikmodul einer von dem Speisestromnetz (4) umfassten Photovoltaikanlage (16) oder an ein als Gleichstromnetz ausgebildetes Speisestromnetz elektrisch anschließbar ist.

6. Ladesäule (1') gemäß einem der Ansprüche 1-5, **dadurch gekennzeichnet, dass** die Ladesäule (1') mit einer eine Mehrzahl von Photovoltaikmodulen umfassenden Photovoltaikanlage (16) elektrisch verbindbar ist und/oder die erste Ladeschaltung (6') des ersten Lade-/Speicherstrangs (5') ein zweites Lademodul (9a-2) mit der bestimmten Mehrzahl von elektrisch voneinander getrennten autarken Ladeeinheiten (10) aufweist, sodass jede der autarken Ladeeinheiten (10) des zweiten Lademoduls (9a-2) auf deren Primärseite mit zumindest einem Photovoltaikmodul, vorzugsweise einer Vielzahl von in Reihe geschalteten Photovoltaikmodulen, elektrisch verbindbar ist und auf deren Sekundärseite mit jeweils genau einer der autarken Ladeeinheiten (10) des ersten Lademoduls (9a-1) parallelgeschaltet ist.

7. Ladesäule (1, 1') gemäß einem der Ansprüche 1-6, **dadurch gekennzeichnet, dass** Primärseite und Sekundärseite jeder einzelnen autarken Ladeeinheit (10) eines Lademoduls (9a-i, 9b-i) der Ladesäule (1, 1') galvanisch voneinander getrennt sind.

8. Ladesäule gemäß einem der Ansprüche 1-7, **dadurch gekennzeichnet, dass** die Ladesäule einen von dem ersten Lade-/Speicherstrang (5, 5') unabhängigen und elektrisch getrennten zweiten Lade-/Speicherstrang sowie einen zweiten Ladeanschluss zum elektrischen Gleichstromladen einer Batterie eines an den zweiten Ladeanschluss anschließbaren Elektrofahrzeugs aufweist, wobei der erste Lade-/Speicherstrang (5, 5') und der zweite Lade-/Speicherstrang auf deren Primärseite zum Einspeisen von elektrischer Energie aus dem Speisestromnetz (4) parallelgeschaltet sind und der zweite Lade-/Speicherstrang vorzugsweise in seinem technischen Aufbau dem ersten Lade-/Speicherstrang (5, 5') gleicht.

9. Ladestation mit einer Mehrzahl von Ladesäulen (1, 1') gemäß einem der Ansprüche 1-6.

## Claims

1. Charging pillar (1, 1') having a first charging terminal (2) for the electrical direct current charging of a battery of an electric vehicle which can be connected to the first charging terminal (2), the charging pillar (1, 1') having a first charging/storage strand (5, 5') which
- is electrically connected to the first charging terminal (2),
- can be electrically coupled to at least one electrical energy storage device (11) and at least includes
- a first charging circuit (6, 6') for charging the at least one electrical energy storage device (11) in the electrically coupled state with electrical energy from a supply network (4), and
- a second charging circuit (8a) for charging the battery of an electric vehicle connectable to the first charging terminal (2) with electrical energy,
**characterized in that**
the charging pillar (1, 1') is modularly constructed in such a way that it has a plurality of technically identical charging modules (9a-i, 9b-i), each individual charging module (9a-i, 9b-i) comprising a certain plurality of self-sufficient charging units (10) electrically separated from one another, and each individual self-sufficient charging unit (10) having a conversion device (12) for converting an input voltage into a direct current output voltage,
wherein the first charging circuit (6, 6') has a first charging module (9a-1) and the 25 second charging circuit (8) has a plurality of charging modules (9b-i),
so that the plurality of charging modules (9b-i) of the second charging circuit (8) is equal to the determined plurality of the electrically separated self-sufficient charging units (10) of a respective charging module (9a-i, 9b-i), wherein
- each self-sufficient charging unit (10) of the first charging module (9a-1) of the first charging circuit (6, 6') can be electrically connected on its primary side to the supply network (4) during operation of the charging pillar (1, 1') and is designed on its secondary side for electrical connection to precisely one electrical energy store (11) in each case and, in the electrically connected state, for charging this electrical energy store (11) with electrical energy from the supply network (4),
- all self-sufficient charging units (10) of a respective charging module (9b-1, 9b-2, 9b- 3) of the plurality of charging modules (9b-i) of the second charging circuit (8) are each designed jointly on their primary side for connection to precisely one electrical energy store (11) and, in the electrically connected state, for drawing electrical energy from this one electrical energy store (11), and
- the self-sufficient charging units (10) of the charging modules (9b-i) of the second charging circuit (8) are connected in parallel on their secondary side and are electrically connected to the first charging connection (2) after their parallel connection.

2. Charging pillar (1, 1') according to claim 1, **characterized in that** the conversion device (12) of each individual self-sufficient charging unit (10) is designed to convert both a direct voltage and an alternating voltage into direct voltage.

3. Charging pillar (1, 1') according to claim 1 or 2, **characterized in that** the charging pillar (1, 1') has a plurality of electrical energy storages (11), wherein each electrical energy storage (11) of the plurality of electrical energy storages (11) is connected to a respective self-sufficient charging unit (10) of the first charging module (9a-1) of the first charging circuit (6, 6') and to all self-sufficient charging units (10) of a respective charging module (9b-1, 9b-2, 9b-3) of the plurality of charging modules (9b- i) of the second charging circuit (8).

4. Charging pillar (1, 1') according to claim 3, **characterized in that** the electrical energy storage (11) are different with regard to at least one variable from the group of their maximum storable energy, their nominal voltage, their maximum charging and discharging current and their state of charge.

5. Charging pillar (1, 1') according to one of the claims 1-4, **characterized in that** each individual charging module (9a-i, 9b-i) has in each case precisely three self-sufficient charging units (10) electrically separated from one another, wherein each of the three self-sufficient charging units (10) of the first charging module (9a-1) of the first charging circuit (6, 6') can be electrically connected to in each case two phases of a supply network (4) designed as a three-phase network or to in each case at least one photovoltaic module of a photovoltaic system (16) comprised by the supply network (4) or to a supply network designed as a direct current network.

6. Charging pillar (1') according to one of the claims 1-5, **characterized in that** the charging pillar (1') can be electrically connected to a photovoltaic system (16) comprising a plurality of photovoltaic modules and/or that the first charging circuit (6') of the first charging/storage strand (5') has a second charging module (9a-2) with the certain plurality of self-sufficient charging units (10) electrically separated from one another, so that each of the self-sufficient charging units (10) of the second charging module (9a-2) can be electrically connected on its primary side to at least one photovoltaic module, preferably to a multiplicity of series-connected photovoltaic modules, and is connected in parallel on its secondary side in each case to exactly one of the self-sufficient charging units (10) of the first charging module (9a-1).

7. Charging pillar (1, 1') according to one of the claims 1-6, **characterized in that** the primary side and secondary side of each individual self-sufficient charging unit (10) of a charging module (9a-i, 9b-i) of the charging pillar (1, 1') are electrically isolated from one another.

8. Charging pillar according to one of the claims 1-7, **characterized in that** the charging pillar has a second charging/storage strand which is independent of and electrically separate from the first charging/storage strand (5, 5'), as well as a second charging terminal for the electrical direct current charging of a battery of an electric vehicle which can be connected to the second charging terminal, wherein the first charging/storage strand (5, 5') and the second charging/storage strand are connected in parallel on their primary side for feeding in electrical energy from the supply network (4) and the second charging/storage strand is preferably similar in its technical construction to the first charging/storage strand (5, 5').

9. Charging station with a plurality of charging pillars (1, 1') according to any of claims 1-6.

## Revendications

1. Borne de recharge (1, 1') avec un premier port de recharge (2) pour le chargement électrique en courant continu d'une batterie d'un véhicule électrique pouvant être raccordé au premier port de recharge (2), la borne de recharge (1, 1') possédant une première ligne de recharge/accumulateur (5, 5'), laquelle
- est électriquement reliée au premier port de recharge (2),
- peut être électriquement couplée avec au moins un accumulateur d'énergie (11) électrique et comprend au moins
- un premier circuit de charge (6, 6') pour charger l'au moins un accumulateur d'énergie (11) électrique à l'état électriquement couplé avec une énergie électrique provenant d'un réseau de courant d'alimentation (4) ainsi que
- un second circuit de charge (8a) pour charger avec une énergie électrique la batterie d'un véhicule électrique pouvant être raccordé au premier port de recharge (2),
**caractérisée en ce que**
la borne de recharge (1, 1') est montée de façon modulable de manière à présenter un grand nombre de modules de recharge (9a-i, 9b-i) techniquement identiques, dans laquelle chaque module de recharge (9a-i, 9b-i) individuel comprend une pluralité déterminée d'unités de recharge (10) autarciques électriquement séparées les unes des autres et chaque unité de recharge (10) autarcique individuelle présente un équipement de conversion (12) pour convertir une tension d'entrée en une tension continue de sortie,
dans laquelle le premier circuit de charge (6, 6') possède un premier module de recharge (9a-1) et le second circuit de charge (8) possède une pluralité de modules de recharge (9b-i),
de sorte que la pluralité des modules de recharge (9b-i) du second circuit de charge (8) soit égale à la pluralité déterminée d'unités de recharge (10) autarciques électriquement séparées les unes des autres d'un module de recharge (9a-i, 9b-i) respectif,
dans laquelle
- chaque unité de recharge (10) autarcique du premier module de recharge (9a-1) du premier circuit de charge (6, 6'), en cours de fonctionnement de la borne de recharge (1, 1'), peut être électriquement reliée sur son côté primaire au réseau de courant d'alimentation (4), et est conçue sur son côté secondaire pour le raccordement électrique à respectivement exactement un accumulateur d'énergie (11) électrique et à l'état électriquement raccordé pour le chargement de cet accumulateur d'énergie (11) électrique avec une énergie électrique provenant du réseau de courant d'alimentation (4)
- toutes les unités de recharge (10) autarciques d'un module de recharge (9b-1, 9b-2, 9b-3) respectif de la pluralité de modules de recharge (9b-i) du second circuit de charge (8) sont conçues sur leur côté primaire respectivement ensemble pour le raccordement à exactement un accumulateur d'énergie (11) électrique et à l'état électriquement raccordé pour puiser une énergie électrique provenant de cedit un accumulateur d'énergie (11) électrique et
- les unités de recharge (10) autarciques des modules de recharge (9b-i) du second circuit de charge (8) sont montées en parallèle sur leur côté secondaire et électriquement reliées au premier port de recharge (2) après leur montage en parallèle.

2. Borne de recharge (1, 1') selon la revendication 1, **caractérisée en ce que** l'équipement de conversion (12) de chaque unité de recharge (10) autarcique individuelle est conçu pour convertir en tension continue tant une tension continue qu'une tension alternative.

3. Borne de recharge (1, 1') selon la revendication 1 ou 2, la borne de recharge (1, 1') étant **caractérisée en ce qu'**elle présente une pluralité d'accumulateurs d'énergie (11) électriques, dans laquelle chaque accumulateur d'énergie (11) électrique de la pluralité d'accumulateurs d'énergie (11) électriques est électriquement raccordé respectivement à une unité de recharge (10) autarcique du premier module de recharge (9a-1) du premier circuit de charge (6, 6') ainsi qu'à toutes les unités de recharge (10) autarciques d'un module de recharge (9b-1, 9b-2, 9b-3) respectif de la pluralité de modules de recharge (9b-i) du second circuit de charge (8).

4. Borne de recharge (1, 1') selon la revendication 3, **caractérisée en ce que** les accumulateurs d'énergie (11) électriques sont différents s'agissant d'au moins une dimension dans le groupe constitué de leur énergie maximale cumulable, de leur tension nominale, de leur courant maximal de charge et de décharge, et de leur état de charge.

5. Borne de recharge (1, 1') selon l'une des revendications 1 à 4, **caractérisée en ce que** chaque module de recharge (9a-i, 9b-i) individuel présente respectivement exactement trois unités de recharge (10) autarciques électriquement séparées les unes des autres, dans laquelle chacune des trois unités de recharge (10) autarciques du premier module de recharge (9a-1) du premier circuit de charge (6, 6') peuvent être électriquement raccordées à respectivement deux phases d'un réseau de courant d'alimentation (4) conçu en tant que réseau à courant triphasé ou à respectivement au moins un module photovoltaïque d'une installation photovoltaïque (16) comprise dans le réseau de courant d'alimentation (4) ou à un réseau de courant d'alimentation conçu en tant que réseau à courant continu.

6. Borne de recharge (1') selon l'une des revendications 1 à 5, la borne de recharge (1') étant **caractérisée en ce qu'**elle peut être électriquement reliée à une installation photovoltaïque (16) comprenant une pluralité de modules photovoltaïques et/ou le premier circuit de charge (6') de la première ligne de recharge/accumulateur (5') présente un second module de recharge (9a-2) avec la pluralité déterminée d'unités de recharge (10) autarciques électriquement séparées les unes des autres, de sorte que chaque unité de recharge (10) autarcique du second module de recharge (9a-2) peut être électriquement reliée sur son côté primaire à au moins un module photovoltaïque, de préférence à une pluralité de modules photovoltaïques montés en série, et montée en parallèle sur son côté secondaire avec respectivement exactement l'une des unités de recharge (10) autarciques du premier module de recharge (9a-1).

7. Borne de recharge (1, 1') selon l'une des revendications 1 à 6, **caractérisée en ce que** le côté primaire et le côté secondaire de chaque unité de recharge (10) autarcique individuelle d'un module de recharge (9a-i, 9b-i) de la borne de recharge (1, 1') sont séparés l'un de l'autre de façon galvanique.

8. Borne de recharge selon l'une des revendications 1 à 7, la borne de recharge étant **caractérisée en ce qu'**elle présente une seconde ligne de recharge/accumulateur indépendante et électriquement séparée de la première ligne de recharge/accumulateur (5, 5') ainsi qu'un second port de recharge pour le chargement électrique en courant continu d'une batterie d'un véhicule électrique pouvant être raccordé au second port de recharge, dans laquelle la première ligne de recharge/accumulateur (5, 5') et la seconde ligne de recharge/accumulateur sur leur côté primaire sont montées en parallèle pour l'alimentation avec une énergie électrique provenant du réseau de courant d'alimentation (4) et la seconde ligne de recharge/accumulateur est de préférence la même en ce qui concerne son montage technique que la première ligne de recharge/accumulateur (5, 5').

9. Station de charge avec une pluralité de bornes de recharge (1, 1') selon l'une des revendications 1 à 6.
